# EUROPEAN PATENT APPLICATION

(11) **EP 2 177 478 A1**
(43) Date of publication of application: **21.04.2010**
(21) Application number: 09172495.5
(22) Date of filing: 08.10.2009
(51) Int. Cl.: C02F 1/04, C02F 9/10, C02F 1/08, C02F 1/20, C02F 1/56, C02F 5/06, C02F 101/16

(54) **Method and systems for processing waste water using zero process water discharge**

(30) Priority: 15.10.2008 US 251934
(71) Applicant: General Electric Company, Schenectady, NY 12345 (US)
(72) Inventor: Vuong, Dinh-Cuong, Sugar Land, TX 77479 (US); Kain, James Scott, Houston, TX 77070 (US)
(74) Representative: Bedford, Grant Richard

(57) **Abstract**

A system (100) for processing wastewater is provided. The system (100) includes a pretreatment system including at least one means for pretreating a flow of wastewater (170), an evaporation system for receiving the pretreated wastewater (176) and producing at least a distillate and an evaporator brine (177), a separation system (109) for separating the evaporator brine to produce a liquid recycle stream (179) and a salt crystal mixture (114).

## Description

The field of the invention relates generally to grey water treatment and, more particularly, to grey water treatment within a gasification system using zero process water discharge.

Industrial process water is typically classified as black water or grey water. Black water is process water that may include high levels of suspended solids and dissolved gases. To reuse the water, black water is converted to grey water for reuse by processes that reduce suspended solids, pressure, and temperature. Thus, grey water contains less suspended solids and dissolved gases as compared to black water. A portion of grey water is blown down for reducing contaminants that may adversely affect the industrial process. Such wastewater, or grey water blowdown, may be produced by industrial applications, such as gasification systems.

Black water and grey water are the terms commonly used to describe water streams in the gasification process. The characteristics of grey water from a gasification system depend on gasifier feedstock and/or gasification process operating conditions, and such grey water may include ammonia, chloride, and formate. Gasification grey water may also include other components, such as alkali and alkaline earth metals, carbon dioxide, suspended solids, transition metals and other reactive species such as silica and sulfides. Known gasification grey water generally has a pH range from approximately 5 to approximately 8 and may have a temperature of about 180°F when discharged into a wastewater processing system. If the grey water is in the acidic pH region, the grey water may be corrosive and, as such, may induce wear on components within the wastewater processing system.

At least one known wastewater processing system for use with grey water treats grey water blowdown, or wastewater, to remove unwanted contaminants before the water is discharged to a water outfall. Wastewater may be treated in an ammonia stripper column to remove ammonia. The stripped ammonia vapor may be disposed in a Sulfur Recovery Unit (SRU). Water discharged from the ammonia stripper is then treated to meet environmental requirements prior to being discharged. For example, a biological treating process may be used to remove formate from the wastewater. If the discharge water does not meet specifications, the wastewater is stored in holding tanks for further testing before final disposition.

Another known wastewater treatment system for gasification grey water blowdown, or wastewater, uses zero process water discharge (ZPWD). ZPWD is a process that does not produce a liquid waste discharge stream. Known wastewater ZPWD processes use a falling-film evaporator, a forced circulation evaporator, a centrifuge, and a drum dryer to produce a solid waste that is disposed and water that is reused in the gasification process. In at least some known ZPWD processes, wastewater is pretreated before it is channeled to the falling-film evaporator. More specifically, pretreating the wastewater may include clarification and/or filtration treatments. However, process components in known ZPWD process systems require the use of materials that are resistant to corrosion. Moreover, such known ZPWD processes typically are lengthy in that they include two major steps: pretreatment and thermal treatment. More particularly, known pretreatment steps generally include four processes: softening/clarification, sludge handling, filtration, and ammonia stripping, and known thermal treatment steps also include four processes: evaporation, crystallization, centrifuge, and salt drying. In addition, known salt drying processes may use at least one drum dryer or more, which also increases the time and costs needed for the process. Moreover, within known systems, water vapor evaporated from the drum dryer surface may carry some fine particulate to the atmosphere, and as such, to comply with current emission standards, additional particulate controlling processes may be needed.

As such, a need exists in the art for processes that can be completed utilizing less steps, thereby lowering costs and reducing the time needed to conduct the treatment of wastewater. Specifically, it would be advantageous if the grey wastewater could be treated without requiring every step of the ZPWD process.

In one aspect according to the present invention, a method for processing wastewater is provided. The method includes pretreating a flow of the wastewater using a pretreatment system, evaporating the pretreated wastewater to produce at least a distillate and a evaporator brine; separating the evaporator brine to produce a liquid recycle stream and a salt crystal mixture; and channeling the liquid recycle stream to a feed stream of a main product production process. In one embodiment, the main product production process is a gasification system for producing syngas.

In another aspect, a system for processing wastewater is provided. The wastewater processing system includes a pretreatment system. The pretreatment system is configured to pretreat a flow of the wastewater. The wastewater processing system also includes an evaporation system for receiving the pretreated wastewater from the pretreatment system. The evaporation system is configured to produce at least a distillate and an evaporator brine. The evaporator brine is further separated to produce a liquid recycle stream and a salt crystal mixture in a separation system, and the liquid recycle stream is then channeled back to a feed stream of a main product production process.

In yet another aspect, a system for processing wastewater is provided. The wastewater processing system includes a pretreatment system. The pretreatment system is configured to pretreat a flow of the wastewater. The wastewater processing system also includes an evaporation system for receiving the pretreated wastewater from the pretreatment system. The evaporation system is configured to produce at least a distillate and an evaporator brine. The evaporator brine is further separated to produce a liquid recycle stream and a salt crystal mixture in a separation system, and the liquid recycle stream is then channeled back to a gasification liquid feed stream that is used to make gasifier feed slurry.

The conventional Zero Process Water Discharge (ZPWD) process for gasification grey water (wastewater) treatment includes two major steps: pretreatment and thermal treatment. The pretreatment step further includes up to four separate processes: softening/clarification, sludge handling, filtration, and ammonia stripping. The thermal treatment step also includes four processes: evaporation, crystallization, centrifuge, and salt drying. The salt drying process for the conventionally used processes will typically uses at least one drum dryer. In some systems, the drum dryer is replaced by a prill tower or a spray dryer for drying brine. Water vapor evaporated from the drum dryer surface will carry some fine particulate to the atmosphere. For complying with emission standards, additional particulate controlling processes are therefore needed. The present invention eliminates the salt drying and particulate controlling steps by recycling the separated liquid recycle stream into the feed stream of the gasifier. More particularly, by recycling the liquid recycle stream into the feed stream of the gasifier, the salt drying step, using the numerous drum dryers is no longer needed. Furthermore, as noted above, the water vapor evaporated from the drum dryers typically carry some fine particulate and thus, by eliminating the salt drying step, the typical particulate emission concern from the drum dryers is further resolved. Moreover, the organic portion of the separated liquid recycle stream will be converted to syngas and the inorganic metal portion will be converted to slag in the gasifier. This improvement scheme will have a significant cost reduction in the gasification ZPWD process. Accordingly, the invention will thus reduce both the capital and operating costs of the ZPWD process.

Various aspects and embodiments of the present invention will now be described in connection with the accompanying drawings, in which:
Figure 1 is a schematic illustration of an exemplary gasification process for use within a syngas generation system.
Figure 2 is a schematic illustration of an exemplary wastewater processing system that may be used with the gasification process shown in Figure 1.
Figure 3 is a schematic illustration of an exemplary gasification system that uses a zero process water discharge process and that may be used with the syngas generation system shown in Figure 1.

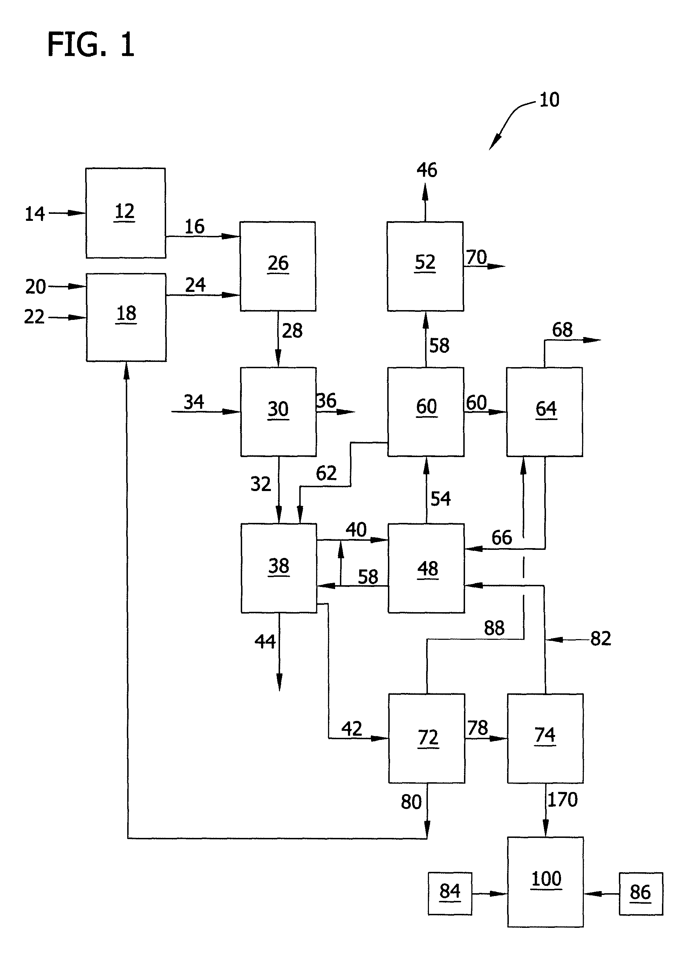

Figure 1 is a schematic diagram of an exemplary gasification process for use with a syngas generation system 10. Syngas generation system 10 generally includes an air separation unit (ASU) 12 for separating air 14 to produce gasifier oxygen 16, and a carbonaceous fuel preparation unit 18 for use in preparing carbonaceous fuel 20 and water 22 to produce gasifier fuel (also referred to herein as a feed stream) 24. ASU 12 and fuel preparation unit 18 are coupled in flow communication to a gasifier 26 that produces a gas/solids mixture 28 by a partial oxidation process of gasifier oxygen 16 and feed stream 24. The gas/solids mixture 28 includes the main product synthetic gas ("syngas") and by-products, which may include solids, such as slag and unburned carbon. Gasifier 26 is coupled in flow communication to a syngas cooler 30 that facilitates cooling the gas/solids mixture 28 to a cooled gas/solids mixture 32. Boiler feed water 34 is supplied to syngas cooler 30 to produce steam 36 for use in downstream units. Syngas cooler 30 is coupled in flow communication to a gas/liquid/solids separation apparatus 38 wherein the cooled gas/solids mixture 32 is separated into raw syngas 40 (gas), black water 42 (liquid), and slag 44. Slag 44 is a by-product which may be reused and/or disposed of off-site.

Raw syngas 40 is converted to clean syngas 46 by channeling raw syngas 40 through a syngas scrubber 48, a syngas cooling system 50, and an acid gas removal system 52. More specifically, syngas scrubber 48 scrubs particulates from raw syngas 40 to produce scrubbed syngas 54 and produces water 56 for use in gas/liquid/solids separation apparatus 38. Syngas cooling system 50 facilitates cooling the scrubbed syngas 54 to produce low temperature syngas 58 that is channeled to acid gas removal unit 52. System 50 also produces condensate 60 and 62 for processing within a condensate stripper 64 and gas/liquid/solids separation apparatus 38, respectively. Condensate stripper 64 strips ammonia from condensate 60 to produce stripped condensate 66 for use in syngas scrubber 48 and produces a by-product ammonia gas 68 that is processed and/or disposed in downstream units. Acid gas removal system 52 removes acid gas 70 from low temperature syngas 58 to produce clean syngas 46. Acid gas 70 is a by-product that may be processed and/or disposed of in downstream units. Clean syngas 46 is the main product of the syngas generation system 10 and can be used for power production, chemical productions, and/or other usage.

Black water 42 from gas/liquid/solids separation apparatus 38 is channeled to a black water handling unit 72. Black water handling unit 72 separates black water 42 into grey water 78 for processing in grey water handling unit 74, vapor stream 88 for using in condensate stripper 64 as a stripping stream, and fluid stream 80 having a high concentration of suspended solids, wherein the fluid stream 80 is channeled for reuse in fuel preparation unit 18. In some embodiments, as shown in Figure 1, the system 10 further includes grey water handling unit 74 that processes grey water 78 to produce a relative lower suspended solids grey water 76 for use in syngas scrubber 48 and a relatively higher suspended solids grey water 170 as wastewater. Grey water 76, which has less suspended solids as compared to black water 42 or grey water 78, may be combined with makeup water 82, if needed, and is used in syngas scrubber 48 as a scrubbing water for the raw syngas 40. A portion of grey water 78 is discharged as wastewater or grey water blowdown 170 to a wastewater processing system 100 for use in reducing contaminant buildup that may adversely affect syngas generation system 10.

System 100 is a wastewater processing system that is applied in flow communication with at least one wastewater source, such as, for example, grey water handling system 74. A chemical store 84 and a plant steam system 86 are each coupled in flow communication with wastewater processing system 100 for supplying chemicals and steam, respectively, to wastewater processing system 100, as described in more detail below.

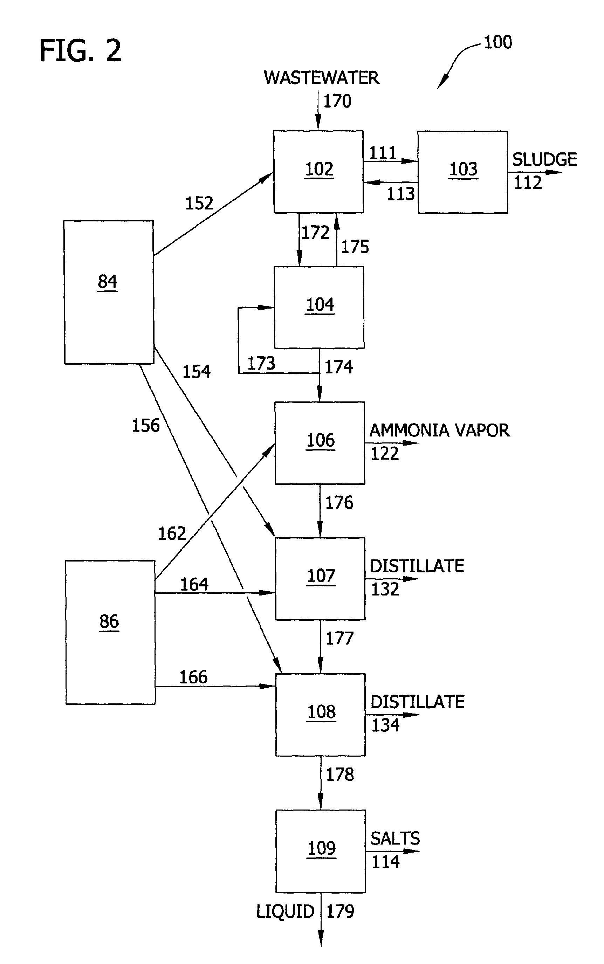

Figure 2 is a schematic illustration of an exemplary wastewater processing system 100 that may be used with syngas generation system 10 (shown in Figure 1). In the exemplary embodiment, wastewater processing system 100 includes softening/clarification system 102 for removing scaling compounds, sludge handling system 103 for handling clarifier solids, filter system 104 for filtering low-suspended-solids feed water, and ammonia stripping system 106 for removing ammonia. The above four systems can be referred as a pretreatment system to provide a pretreated feed water for a thermal step. The thermal step includes evaporator system 107 for evaporating pretreated water 176, crystallization system 108 for producing concentrated stream 178, and separation system (also referred to herein as centrifuge) 109 for separating solids (e.g., salt crystal mixture 114) form a liquid recycle stream 179.

The softening/clarification system 102 receives wastewater 170 from, for example, syngas generation system 10 and processes wastewater 170 such that, for example, wastewater 170 is softened and/or clarified.

To soften wastewater 170, softening/clarification system 102 receives chemicals 152 from chemical store 84. Such chemicals 152 may include, for example, but are not limited to only including, calcium compounds, lime, caustics, and/or magnesium compounds and the like, to soften grey water 170 by reducing hardening substances, and some metal values, within wastewater 170. As used herein, the term "caustic" refers to a source of hydroxide ion. Further, as used herein, the term "hardening substances" refers to substances that include dissolved minerals and/or ions, such as calcium, bicarbonate, sodium, chloride, magnesium, phosphate, and/or silica ions therein. In the exemplary embodiment, lime and/or caustics are alkalizing agents, and magnesium compounds are used to reduce silica. By softening wastewater 170, hardening substances are faciltiated to be reduced. As such, the fouling potential of wastewater processed in system 100 is facilitated to be reduced in downstream operations because wastewater 170 includes less hardening substances that tend to adhere to and/or corrode surfaces within processing system 100.

Moreover, in the exemplary embodiment, softening/clarification system 102 filters wastewater 170 using, for example, a polymer, such as a coagulant and/or a flocculant, to coagulate suspended solids from wastewater 170. More specifically, in the exemplary embodiment, organic coagulants and/or organic flocculants, such as, but not limited to, diallyldimethylamine ammonium chloride (DADMAC) polymers, are supplied to softening/clarification system 102 to facilitate removing solids from wastewater 170 by, for example, coagulating and/or flocculating solids within wastewater 170. Softening/clarification system 102 then discharges clarified wastewater 172 to filter system 104 and discharges sludge 111 to sludge handling system 103. As used herein, the term "sludge" refers to accumulated and/or concentrated solids generated within a softening/clarification process. Sludge handling system 103 dewaters sludge 111 to produce relatively dry sludge cake 112 for disposable off-site and liquid stream 113 that is returned to softening/clarification system 102. As such, in the exemplary embodiment, softening/clarification system 102 facilitates removing from wastewater 170 at least one of a hardening substance, a scale-forming substance, a silica, a metal oxide, and an inorganic substance. Alternatively, softening/clarification system 102 processes wastewater 170 via any suitable means that enables wastewater processing system 100 to function as described herein. For low scale-potential wastewater 170, softening/clarification system 102 and sludge handling system 103 may be omitted from the pretreatment process.

In the exemplary embodiment, filter system 104 receives clarified wastewater 172 and performs a filtration process on water 172 to produce filtered wastewater 174. A portion of filtered wastewater 174 is used as backwash water 173 for filter system 104. In the backwash process of filter system 104, spent backwash stream 175 is returned to softening/clarification system 102. The filtered wastewater 174 reduces the solids fouling in ammonia stripping system 106.

Filtered wastewater 174 is channeled from filter system 104 to ammonia stripping system 106 in the exemplary embodiment. Further, steam 162, such as a steam from plant steam system 86, is supplied to ammonia stripping system 106 to facilitate the removal and/or stripping of ammonia from filtered wastewater 174. For example, ammonia stripping system 106 discharges ammonia vapor 122 to a disposal unit (not shown) and discharges stripper bottoms 176 into evaporation system 107. As used herein the term "stripper bottoms" refers to water that includes a reduced amount of ammonia and/or a reduced amount of other components that were removed by upstream processes, as compared to the wastewater 170 entering processing system 100. The stripper bottoms may include soluble chemical species, such as chloride and formate that were in the original wastewater 170. Further, although the stripping of ammonia is described herein, ammonia may be removed from wastewater 174 using any suitable ammonia removal method, such as, for example, extraction.

While described herein as being subsequent to concentrating the flow of wastewater 170, it should be recognized that ammonia stripping system 106 can be used prior to filtering the wastewater in filter system 104 without departing from the scope of the present invention. Furthermore, it should be recognized that ammonia stripping system 106 can be completely eliminated in the processing system 100 without departing from the scope of the present invention.

Within evaporation system 107, water within stripper bottoms 176 is evaporated using steam 164 and/or chemicals 154. In the exemplary embodiment, evaporation system 107 is a thermal evaporation system, such as a falling film evaporator, that evaporates any liquid within the stripper bottoms 176 using heated surfaces. The evaporated stripper bottoms 176 are referred to herein as evaporator brine 177. In one embodiment, evaporation system 107 has a mechanical vapor compressor (not shown). In the exemplary embodiment, chemicals 154, such as caustic chemicals, antifoam chemicals, and/or acidic chemicals, are supplied to evaporation system 107 from chemical store 84, and steam 164 is supplied to evaporation system 107 from, for example, plant steam system 86. More specifically, in the exemplary embodiment, caustic chemicals may be used to adjust the pH of the evaporator brine 177, and antifoam chemicals may be supplied as needed. The interactions among the stripper bottoms 176, steam 164, and chemicals 154 produce distillate 132 that may be re-used within syngas generation system 10 and produce evaporator brine 177 that is further processed within wastewater processing system 100. As used herein, the term "distillate" refers to water that is substantially free of contaminates and/or impurities. The evaporator brine 177 is then channeled from evaporation system 107 to crystallization system 108. In an alternative embodiment, distillate 132 may be stored in a nitrogen blanketed treated waster storage tank or a non-blanketed treated water storage tank (not shown).

As shown in Figure 2, crystallization system 108 has a similar function as that of evaporation system 107. Crystallization system 108 further evaporates water from evaporator brine 177 by using chemicals 156 from chemical store 84, if needed, and steam 166 from steam system 86 to produce distillate 134 and concentrated brine 178. In the exemplary embodiment, crystallization system 108 is a thermal evaporation system, such as a forced circulation evaporator, that evaporates water within evaporator brine 177 using heated surfaces. Chemicals 156 may be similar to chemicals 154, and distillate 134 is similar to distillate 132 that can be reused in the gasification system 10 of Figure 1. Concentrated brine 178 is stored in a feed tank for cooling (not shown). During brine cooling, salt crystals are formed from concentrated brine 178 by the temperature and solubility relationship of the salt compounds, such as sodium chloride and sodium formate.

Still referring to Figure 2, concentrated brine 178 with salt crystals is channeled to separation system 109 wherein additional separation occurs. More specifically, concentrated brine 178 is separated into liquid recycle stream 179 and salt crystal mixture 114. In the exemplary embodiment, separation system 109 further recycles liquid recycle stream 179 to be re-used in syngas generation system 10; that is, liquid recycle stream 179 is recycled via separation system 109 by returning liquid recycle stream 179 into feed stream 22 of syngas generation system 10.

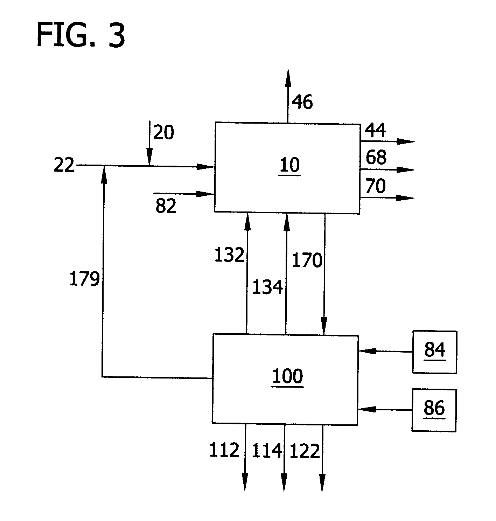

Figure 3 is a schematic illustration summary of an exemplary gasification system 10 using a zero process water discharge process 100 of one embodiment of the present invention. The overall process summary shows production of main product clean syngas 46 with six gaseous and solid byproducts and no liquid product from the above described processes. Furthermore, while not shown, in one or more embodiments, the organic portion of liquid recycle stream 179 will be converted to syngas and the inorganic metal portion of liquid recycle stream 179 will be converted to slag in gasifier 26 or some dissolved in black water 42 (shown in Figure 1).

The above-described systems and methods facilitate providing an improved ZPWD process for wastewater without using either the salt drying and particulate controlling steps by recycling the liquid recycle stream into the feed stream of the gasifier. As noted above, the elimination of these steps resolves the particular emission concern from the drum dryers of the conventional drying systems used in ZPWD processes. Accordingly, various aspects of this invention will reduce both the capital and operating costs of the ZPWD process.

Exemplary embodiments of methods and systems for processing wastewater are described above in detail. The methods and systems are not limited to the specific embodiments described herein, but rather, components of systems and/or steps of the methods may be utilized independently and separately from other components and/or steps described herein. For example, the methods and/or systems may also be used in combination with other wastewater processing systems and/or methods, and are not limited to practice with only the gasification system as described herein. Rather, the exemplary embodiments can be implemented and utilized in connection with many other water processing applications.

Although specific features of various embodiments of the invention may be shown in some drawings and not in others, this is for convenience only. In accordance with the principles of the invention, any feature of a drawing may be referenced and/or claimed in combination with any feature of any other drawing.

While the methods and systems described herein have been described in terms of various specific embodiments, those skilled in the art will recognize that the methods and systems described herein can be practiced with modification within the spirit and scope of the claims.

Various aspects and embodiments of the present invention are defined by the following numbered clauses:
1. A method for processing wastewater, said method comprising:
   pretreating a flow of wastewater using a pretreatment system;
   evaporating the pretreated wastewater to produce at least a distillate and an evaporator brine;
   separating the evaporator brine to produce a liquid recycle stream and salt crystal mixture; and
   channeling the liquid recycle stream to a feed stream.
2. A method in accordance with Clause 1, wherein pretreating the wastewater further comprises at least one of softening and clarifying the wastewater to facilitate removing from the wastewater at least one of a hardening substance, a scale-forming substance, a silica, a metal oxide, and an inorganic substance.
3. A method in accordance with any preceding Clause, wherein pretreating the wastewater further comprises filtering the wastewater.
4. A method in accordance with any preceding Clause, further comprising stripping at least ammonia from the wastewater.
5. A method in accordance with any preceding Clause, further comprising concentrating the evaporation brine.
6. A method in accordance with any preceding Clause, further comprising cooling the concentrated brine.
7. A method in accordance with any preceding Clause, further comprising separating the concentrated brine.
8. A method in accordance with any preceding Clause, wherein separating the concentrated brine comprises separating a salt crystal mixture from the concentrated brine by a separation means.
9. A method in accordance with any preceding Clause, wherein pretreating the wastewater further comprises pretreating grey water produced by a gasification process.
10. A method in accordance with any preceding Clause, wherein channeling the liquid recycle stream to the feed stream further comprises channeling the liquid recycle stream to the feed stream of a gasifier, and said method further comprises:
   converting an organic portion of the liquid recycle stream to syngas; and
   converting an inorganic metal portion of the liquid recycle stream to slag in the gasifier.
11. A system for processing wastewater, said system comprising:
   a pretreatment system comprising at least one means for pretreating a flow of wastewater;
   an evaporation system for receiving the pretreated wastewater and producing at least a distillate and an evaporator brine;
   a separation system for separating the evaporator brine to produce a liquid recycle stream and a salt crystal mixture.
12. The system in accordance with Clause 11, wherein the separation system further channels the liquid recycle stream to a feed stream.
13. A system in accordance with Clause 11 or 12, wherein said pretreatment system comprises a softening/clarification system.
14. A system in accordance with any of Clauses 11 to 13, wherein said pretreatment system further includes a sludge handling system.
15. A system in accordance with any of Clauses 11 to 14, wherein said pretreatment system further comprises a filtration system.
16. A system in accordance with any of Clauses 11 to 15, further comprising an ammonia stripping system configured to strip at least ammonia from the wastewater.
17. A system in accordance with any of Clauses 11 to 16, wherein the wastewater is grey water produced by a gasification process, and wherein the separation system channels the liquid recycle stream to a feed stream of a gasifier.
18. A system for processing wastewater in a gasification process, said system comprising:
   a pretreatment system comprising at least one of a softening/clarification system, a sludge handling system, a filtration system, and an ammonia stripping system for pretreating a flow of wastewater;
   an evaporation system for receiving the pretreated wastewater and producing at least a distillate and an evaporator brine;
   a separation system for separating the evaporator brine to produce a liquid recycle stream and salt crystal mixture, and for channeling the liquid recycle stream to a feed stream of a gasifier.
19. A system in accordance with any of Clauses 11 to 18, wherein said gasifier is capable of converting an organic portion of the liquid recycle stream to syngas for use in the gasification system and converting an inorganic metal portion of the liquid recycle stream to slag.
20. A system in accordance with any of Clauses 11 to 19, further comprising a crystallization system for concentrating the evaporation brine prior to introducing the evaporation brine into the separation system.

## Claims

1. A system (100) for processing wastewater, said system comprising:
a pretreatment system comprising at least one means for pretreating a flow of wastewater (170);
an evaporation system for receiving the pretreated wastewater (176) and producing at least a distillate and an evaporator brine (177);
a separation system (109) for separating the evaporator brine to produce a liquid recycle stream (179) and a salt crystal mixture (114).

2. The system (100) in accordance with Claim 1, wherein the separation system (109) further channels the liquid recycle stream (179) to a feed stream (22,24).

3. The system (100) in accordance with any preceding Claim, wherein said pretreatment system comprises a softening/clarification system (102).

4. The system (100) in accordance with any preceding Claim, wherein said pretreatment system further includes a sludge handling system (103).

5. The system (100) in accordance with any preceding Claim, wherein said pretreatment system further comprises a filtration system (104).

6. The system (100) in accordance with any preceding Claim, further comprising an ammonia stripping system (106) configured to strip at least ammonia (68) from the wastewater (170).

7. The system (100) in accordance with any preceding Claim, wherein the wastewater (170) is grey water (76,78) produced by a gasification process, and wherein the separation system (109) channels the liquid recycle stream (179) to a feed stream (22,24) of a gasifier (26).

8. A system (100) for processing wastewater (76,78) in a gasification process, said system comprising:
a pretreatment system comprising at least one of a softening/clarification system (102), a sludge handling system (103), a filtration system (104), and an ammonia stripping system (106) for pretreating a flow of wastewater (76,78);
an evaporation system for receiving the pretreated wastewater and producing at least a distillate (132,134) and an evaporator brine (177);
a separation system for separating the evaporator brine to produce a liquid recycle stream (179) and salt crystal mixture (114), and for channeling the liquid recycle stream to a feed stream (22,24) of a gasifier (26).

9. The system (100) in accordance with any preceding Claim, wherein said gasifier is capable of converting an organic portion of the liquid recycle stream (179) to syngas for use in the gasification system and converting an inorganic metal portion of the liquid recycle stream to slag (55).

10. The system (100) in accordance with any preceding Claim, further comprising a crystallization system (108) for concentrating the evaporation brine (177) prior to introducing the evaporation brine into the separation system (109).
